# EUROPÄISCHE PATENTSCHRIFT

(11) **EP 2 228 268 B1**
(45) Veröffentlichungstag und Bekanntmachung des Hinweises auf die Patenterteilung: **04.05.2016**
(21) Anmeldenummer: 10002199.7
(22) Anmeldetag: 04.03.2010
(51) Int. Cl.: B60R 21/34, E05D 3/14

(54) **Scharniereinrichtung für eine Frontklappe eines Kraftfahrzeugs**
Articulating device for a front end of a motor vehicle
Dispositif de charnière pour un clapet frontal d'un véhicule automobile

(30) Priorität: 14.03.2009 DE 102009013262
(43) Veröffentlichungstag der Anmeldung: 15.09.2010
(73) Patentinhaber: Bayerische Motoren Werke Aktiengesellschaft, 80809 München (DE)
(72) Erfinder: Flöck, Stefan, Dr., 81245 München (DE); Riedl, Wilhelm, 85276 Pfaffenhofen (DE); Köstler, Ulrich, 85241 Hebertshausen (DE); Dockweiler, Achim, 81829 München (DE)

(56) Entgegenhaltungen:
- EP-A2- 1 104 727
- DE-A1- 10 111 146
- JP-A- 2007 245 927
- JP-A- 2007 245 936
- US-A1- 2002 011 365

## Beschreibung

Die Erfindung betrifft eine Scharniereinrichtung für eine Frontklappe eines Kraftfahrzeugs.

Eine derartige Scharniereinrichtung ist in der DE 101 11 146 A1 beispielsweise für eine Frontklappe eines Kraftfahrzeugs vorgesehen und weist einen Scharnierhebel auf, der um eine Schwenkachse schwenkbar zumindest mittelbar mit der Frontklappe verbunden ist. Andererseits ist der Scharnierhebel über eine andere Schwenklagerung zumindest mittelbar an der Karosserie des Kraftfahrzeugs abgestützt. Die Scharniereinrichtung kann zwar ein normales Öffnen der Frontklappe und eine Anheben der Frontklappe in eine erhöhte Fußgängerschutzlage ermöglichen, in der die Frontklappe bei einem unfallbedingten Aufprall eines Körpers, beispielsweise eines Fußgängers, nach unten federn und/oder dämpfend nachgeben kann. In der Schließlage der von wenigstens einem Schloss verriegelten Frontklappe bietet die Scharniereinrichtung keinen Schutz, wenn die Frontklappe nicht in eine Fußgängerschutzlage hochstellbar ist oder ein Hochstellen der Frontklappe in die Fußgängerschutzlage nicht gelingt. Bei einer unfallbedingten Belastung der Frontklappe von vorne, dürfte sich die Frontklappe nach hinten verstellen, wodurch die Kinematik des Scharniers eventuell verklemmt und nicht oder nur eingeschränkt funktionsfähig ist.

In der DE 101 11 146 A1 ist zum Stand der Technik ausgeführt, dass bereits vorgeschlagen worden ist, als Maßnahme der aktiven Sicherheit einer Klappe, insbesondere einer Frontklappe an einem Kraftfahrzeug auslösergesteuert in eine Spaltabstandsstellung zu katapultieren. Dies erfolgt vor dem Hintergrund, dass im geschlossenen Zustand unterhalb der Klappe der gesamte zur Verfügung stehende Raum mit Aggregaten oder dergleichen ausgefüllt ist, so dass die Klappe nur wenig Deformationsraum besitzt. Wird die Klappe in die Abstandsstellung gebracht, so erhöht sich der Deformationsraum.

In der EP 1 104 727 A2 weist eine Scharniereinrichtung zum Verstellen der Fronthaube eines Kraftfahrzeugs eine Mehrgelenkanordnung mit wenigstens zwei Gelenkarmen auf, von denen ein Gelenkarm über eine Zapfen-/Langlochführung abgestützt ist. In dem Langloch der Zapfen-/Langlochführung ist ein Deformationselement angeordnet, das bei einer unfallbedingten Absenkbewegung der Frontklappe ein Verstellen des betreffenden Gelenkarmes über die Zapfen-/Langlochführung ermöglicht und dabei Energie absorbierend wirkt. Zur Fixierung des betreffenden Gelenkarmes im Bereich der Zapfen-/Langlochführung weist das Langloch einen Bereich auf, in dem der Zapfen der Zapfen-/Langlochführung formschlüssig aufgenommen ist, so dass sich der Zapfen erst nach dem Überschreiten einer vorgegebenen unfallbedingten Belastung in dem Langloch verstellen kann. Bei einem unfallbedingten Aufprall auf die Frontklappe von vorne dürfte das Deformationselement nicht oder lediglich unwesentlich stützend wirken.

Der Erfindung liegt die Aufgabe zu Grunde, eine Scharniereinrichtung mit den Merkmalen im Oberbegriff des Patentanspruches 1 anzugeben, die einen unfallbedingt auf die Frontklappe aufprallenden Fußgänger besser schützt und die Frontklappe bei unfallbedingten Kräften von vorne stabiler festhält.

Diese Aufgabe ist durch die Merkmale im Patentanspruch 1 gelöst. Vorteilhafte Ausgestaltungen der Erfindung sind den Unteransprüchen entnehmbar.

Die erfindungsgemäße Scharniereinrichtung für eine Frontklappe eines Kraftfahrzeugs weist einen Scharnierhebel auf, der um eine Schwenkachse schwenkbar zumindest mittelbar mit einer Frontklappe verbunden und andererseits über eine Schwenklagerung zumindest mittelbar an der Karosserie des Kraftfahrzeugs abgestützt ist. Eine Überlastverbindung hält den Scharnierhebel in seiner Winkellage gegenüber der Karosserie fest, die beim Überschreiten einer unfallbedingten Belastung von oben ein Verschwenken des Scharnierhebels gegenüber der Karosserie ermöglicht. Ein Stützhebel ist um eine Achse schwenkbar zumindest mittelbar mit der Karosserie verbunden. Bei einem Aufprall beispielsweise eines Fußgängers auf die Frontklappe von oben, bei dem eine unfallbedingte Belastung überschritten und beim Verstellen der Frontklappe nach unten der Scharnierhebel verschwenkt wird, verschwenkt der Scharnierhebel den Stützhebel gegen die Kraft eines Federelements. Beim Überschreiten einer unfallbedingten Belastung der Frontklappe von vorne stützt dagegen der Stützhebel den Scharnierhebel sofort oder zumindest nach einem kleinen Verstellweg des Scharnierhebels. Auf diese Weise schützt die Scharniereinrichtung einen unfallbedingt auf die Frontklappe aufprallenden Fußgänger und hält die Frontklappe bei unfallbedingten Kräften von vorne, beispielsweise bei einem Frontalcrash stabiler fest.

Ein Ausführungsbeispiel der Erfindung wird anhand einet Zeichnung näher erläutert. Es zeigen
- Fig. 1: eine vereinfachte Seitenansicht der Scharniereihrichtung in Schließlage der Front klappe des Kraftfahrzeugs,
- Fig. 2: eine Fig. 1 entsprechende Ansicht bei in eine Offenlage geschwenkter Frontklappe,
- Fig. 3: eine Fig. 1 entsprechende Ansicht nach einem Aufprall eines Fußgängerauf die Frontklappe in einer etwas abgesenkten Lage eines Bereiches der Frontklappe,
- Fig. 4: eine Fig. 3 entsprechende Ansicht, in der die Frontklappe durch den Aufprall des Fußgängers gegenüber der in Fig. 3 dargestellten Lage weiter nach unten verstellt ist,
- Fig. 5: eine Fig. 1 entsprechende Ansicht, in der die Frontklappe bei oder vor einem Aufprall eines Fußgängers auf die Frontklappe von einem motorischen Aktuator in eine Schutzlage angehoben ist,
- Fig. 6: eine Fig. 1 entsprechende Ansicht, in der die in ihrer Schließlage verriegelte Frontklappe durch einen Frontalcrash etwas zu dem Stützhebel zurück verstellt ist,
- Fig. 7: eine Fig. 6 entsprechende Ansicht, in der durch eine geringfügige weitere unfallbedingte Rückverlagerung der Frontklappe der Stützhebel in seine Totpunktlage verstellt ist,
- Fig.: 8 eine Fig. 1 entsprechende Ansicht, in der wesentliche Teile der Scharniereinrichtung in eine Service-Stellung geschwenkt sind, in der die Wartung von beispielsweise unter der Frontklappe befindlichen Bauteilen erleichtert ist und
- Fig. 9: eine Prinzipskizze, die bei einer Verwendung der Scharniereinrichtung an unterschiedlichen Fahrzeugen einige mögliche Lagen eines verwendeten Scherbolzens bzw. seiner Aufnahmeöffnung darstellen soll und konstruktive Einzelheiten insbesondere zu dem Schwenkteil enthält.

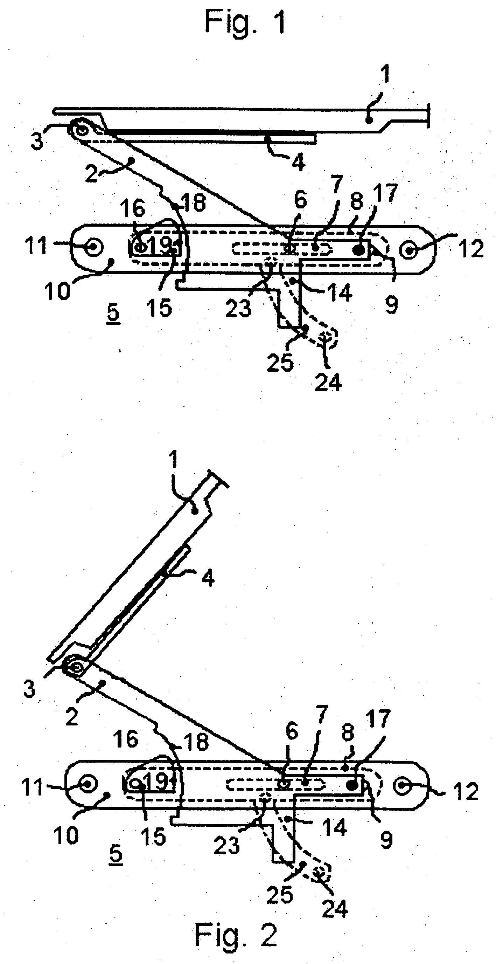

Die in Figur 1 in einer vereinfachten Seitenansicht bei geschlossener Frontklappe 1 eines Kraftfahrzeugs dargestellte Scharniereinrichtung ist zur höhenverstellbaren Abstützung eines hinteren Seitenbereiches der Frontklappe 1 vorgesehen, wobei seitlich gegenüber eine vergleichbare, nicht dargestellte Scharniereinrichtung angeordnet ist.

Die Frontklappe 1 weist eine Fußgängerschutzeinrichtung auf, die einen Aufprall eines Fußgängers auf die vorne über wenigstens ein Schloss verriegelt bleibende Frontklappe 1 elastisch und/oder dämpfend abfangen und dadurch Verletzungen vermeiden oder ihre Auswirkungen wesentlich mindern kann. Außerdem weist die Frontklappe 1 eine Stützeinrichtung auf, die bei einem Frontalcrash beispielsweise mit einem anderen Fahrzeug einen mit der Frontklappe 1 mittelbar verbundenen Scharnierhebel 2 stützt, wobei die geschlossene Frontklappe 1 über das wenigstens eine Schloss zumindest gegenüber einer etwa vertikalen Verstellbewegung verriegelt bleibt.

Der Scharnierhebel 2 ist um eine Schwenkachse 3 schwenkbar mit einem Scharnierteil 4 verbunden, das an der Frontklappe 1 fest oder lösbar befestigt ist. An einer anderen, vorderen unteren Stelle ist der Scharnierhebel 2 über eine Zapfen-/Langlochverbindung mittelbar mit der Karosserie 5 des Kraftfahrzeugs verbunden. Die Zapfen-/Langlochverbindung weist einen mit dem Scharnierhebel 2 fest verbundenen Zapfen 6 auf, der in ein Langloch 7 in einem Wartungsschwenkteil 8 in Breitenrichtung mit einem kleinen Spiel eingreift. Das Wartungsschwenkteil 8 ist in der Figur durch eine unterbrochene Umrisslinie dargestellt und um eine Wartungsschwenkachse 9 an einem Verstärkungselement 10 schwenkbar angeordnet, das mit der Karosserie 5 fest oder beispielsweise über Schrauben im Bereich der Öffnungen 11, 12 lösbar verbunden ist. Das Wartungsschwenkteil 8 ist lediglich zu Wartungszwecken um die Wartungsschwenkachse 9 an der Karosserie 5 in eine Wartungslage hochschwenkbar. Im Normalfall ist das Wartungsschwenkteil 8 über eine Halteeinrichtung einerseits in einer etwa horizontalen Normallage sowie in einer um die Karosserieachse hochgeschwenkten Wartungslage arretierbar.

Bei dem Ausführungsbeispiel hält die Halteeinrichtung das Wartungsschwenkteil 8 über eine einzige Schraube in seiner etwa horizontalen Normallage und in seiner hochgeschwenkten Wartungslage gegenüber der Karosserie 5 fest. Hierzu ist die Schraube in der Normallage und in der Wartungslage durch jeweils eine Durchtrittsöffnung 23, 24 im Wartungsschwenkteil 8 hindurch in ein Gewinde an der Karosserie 5 oder an einem mit der Karosserie verbundenen Bauteil einschraubbar. Die Durchtrittsöffnungen 23, 24 sind in winkelmäßigen Abständen um die Wartungsschwenkachse 9 an einem Schenkel 25 des Wartungsschwenkteiles 8 ausgebildet.

Eine Überlastverbindung hält den Scharnierhebel 1 in seiner in Fig. 1 dargestellten Winkellage gegenüber der Karosserie 5 fest, die beim Überschreiten einer unfallbedingten Belastung der Frontklappe 1. in einer etwa vertikalen Richtung gelöst wird und dann ein Verschwenken des Scharnierhebels 1 um einen Zapfen 6 einer Zapfen-/Langlochverbindung gegenüber der Karosserie 5 ermöglicht. Die Frontklappe 1 kann dadurch zumindest im Bereich der Scharniereinrichtung abgesenkt und der Aufprall des Fußgängers über eine nicht dargestellte Federungs- und/oder Dämpfungseinrichtung abgefedert und/oder gedämpft werden. Die Überlastverbitidung ist bei dem Ausführungsbeispiel durch einen Scherbolzen 17 gebildet, der bei einer vorgegebenen unfallbedingten Belastung abgeschert wird und in einem Abstand von der durch eine Zapfen-/Langlochverbindung gebildeten Schwenklagerung an dem Scharnierhebel 2 angeordnet ist und normal eine Öffnung an dem Wartungsschwenkteil 8 eingreift.

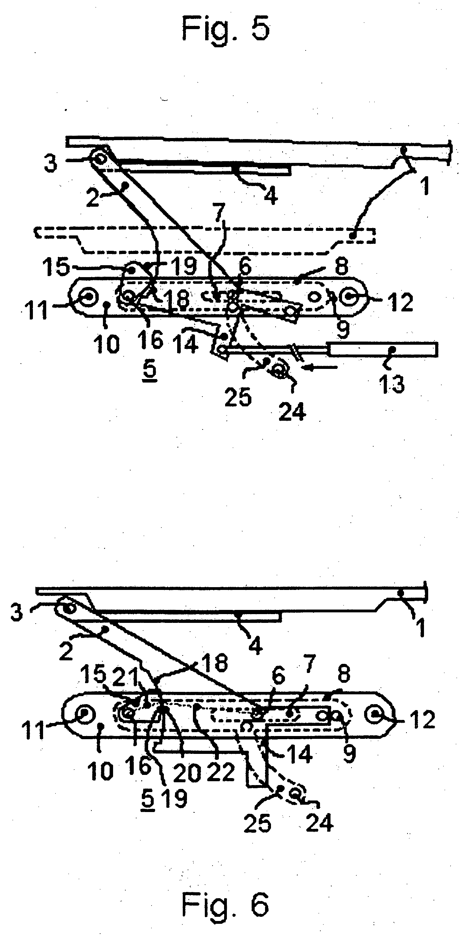

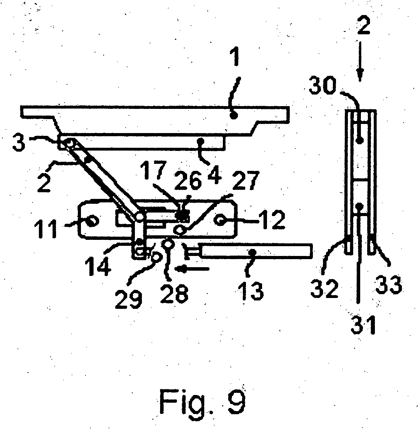

Die Überlastverbindung wird von einem in den Figuren 5 und 9 dargestellten Aktuator 13 gelöst und dabei der Scherbolzen 17 abgeschert, wenn der Aktuator 13 von einer Sensoreinrichtung, die einen eingetretenen oder bevorstehenden Aufprall beispielsweise eines Fußgängers erfasst, die von dem Schloss verriegelte Frontklappe 1 zumindest im Bereich der Scharniereinrichtung wie in Fig. 5 dargestellt aktiv in eine Schutzlage anhebt und dabei den Scharnierhebel 2 gegenüber dem Wartungsschwenkteil 8 verschwenkt. Hierzu bewirkt der Aktuator 13 beispielsweise über einen Hebelarm 14 am Scharnierhebel 2 wie in den Fig. 5 und 9 dargestellt ein entsprechendes Drehmoment an dem Scharnierhebel 2 um den Zapfen 6.

Wie Fig. 2 zu entnehmen ist, kann nach dem Lösen des wenigstens einen Schlosses zur Verriegelung der wie in Fig. 1 geschlossenen Frontklappe 1 die Frontklappe 1 um die Schwenkachse 3 nach oben geschwenkt werden, wodurch beispielsweise ein unter der Frontklappe 1 befindlicher Motorraum zugänglich ist.

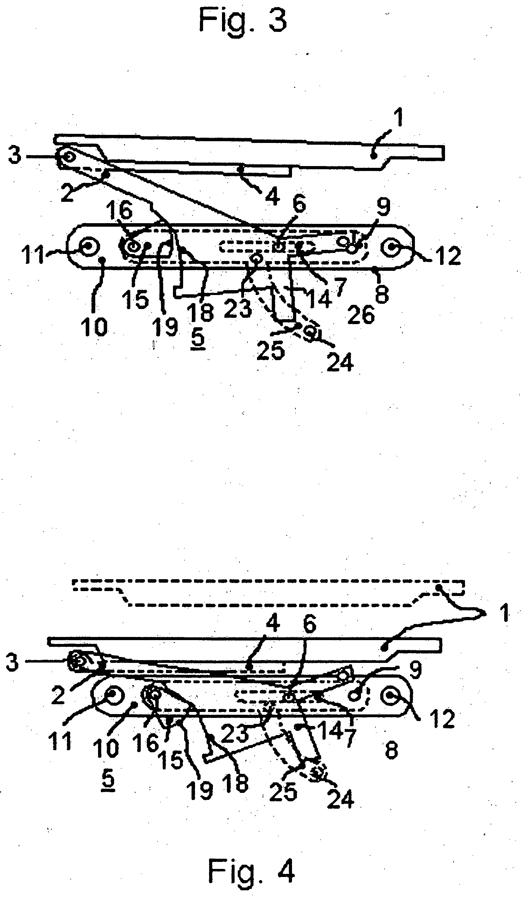

Den Fig. 1 bis 8 ist entnehmbar, dass ein Stützhebel 15 um eine Achse 16 schwenkbar an dem Wartungsschwenkteil 8 befestigt ist. Bei einem Aufprall beispielsweise eines Fußgängers von oben auf die geschlossene und von dem Schloss verriegel-ten Frontklappe 1, bei dem eine unfallbedingte Belastung überschritten wird, erfolgt ebenfalls wie in Fig. 3 dargestellt ein Abscheren des Scherbolzens 17. Der Scharnierhebel 2 ist dadurch für eine Schwenkbewegung um den Zapfen 6 frei gegeben, so dass sich die Frontklappe 1 nach unten verstellen kann und dabei eine nicht dargestellte Federungs- und/oder Dämpfungseinrichtung den Aufprall dämpft.

Beim unfallbedingten Verstellen der Frontklappe 1 durch den Aufprall nach unten kommt der Scharnierhebel 2 nach einer Schwenkbewegung und eventuell einer selbsttätigen Verschiebebewegung des Zapfens 6 in dem Langloch 7 wie in Fig. 3 dargestellt an dem Stützhebel 15 zur Anlage und verschwenkt diesen an seinem Hebelbereich nach unten beispielsweise in die in Fig. 4 dargestellte Lage. Dabei verschwenkt der Scharnierhebel 2 den Hebelbereich des Stützhebels 15 gegen die Kraft eines nicht dargestellten Federelements nach unten. Je nach Auslegung des Federelements kann der von dem Federelement nach oben belastete Stützhebel 15 zusammen mit dem Federelement den Aufprall elastisch abfangen. Da hierbei bei dem Ausführungsbeispiel der Scharnierhebel 2 und der Stützhebel 15 gegensinnig Verschwenken, erfolgt an der Berührstelle des Scharnierhebels 2 und des Stützhebels 15 eine den Aufprall durch Reibung dämpfende Relativbewegung des Scharnierhebels 2 und des Stützhebels 15.

Beim Überschreiten einer anderen unfallbedingten Belastung der Frontklappe 1 von vorne, beispielsweise bei einem Frontalcrash, stützt der Stützhebel 15 den Scharnierhebel 2 sofort oder zumindest nach einem kleinen Verstellweg des Scharnierhebels 2 nach hinten, wie dies in Fig. 6 dargestellt ist. Je nachdem, in welchem normalen Abstand der Scharnierhebel 2 vor dem Stützhebel 15 angeordnet ist, wird der Scherbolzen 17 früher oder später oder eventuell nicht abgeschert. Zur Anpassung des Scharbolzens 17 an unfallbedingte etwa vertikale und etwa horizontale Belastungen kann der Scherbolzen 17 einen unsymmetrischen Querschnitt aufweisen, der bei einer vorgegebenen vertikalen unfallbedingten Belastung und/oder bei einer vorgegebenen horizontalen unfallbedingten Belastung abschert.

Der Scharnierhebel 2 weist eine Steuerfläche 18 auf, die bei einem unfallbedingten Aufprall zum Beispiel eines Fußgängers auf die Frontklappe 1 von oben, bei dem die Überlastverbindung gelöst bzw. der Scherbolzen 17 abgeschert wird, sofort oder nach einer lokalen Absenkbewegung der Frontklappe 1 an einer Gegensteuerfläche 19 des Stützhebels 15 anliegt und bei einer nachfolgenden Absenkbewegung zumindest eines Bereiches der Frontklappe 1 mit der Gegensteuerfläche 19 zusammen wirkend einen Hebelbereich des Stützhebels 15 gegen die Kraft des nicht dargestellten Federelements nach unten verstellt.

Die Steuerfläche 18 des Scharnierhebels 2 und die damit zusammen wirkende Gegensteuerfläche 19 des Stützhebels 15 sind so ausgebildet, dass bei einem unfallbedingten Aufprall beispielsweise eines Fußgängers auf die Frontklappe von vorne, bei dem die Überlastverbindung gelöst bzw. der Scherbolzen 17 abgeschert wird und durch die Belastung der Frontklappe 1 von vorne die Steuerfläche 18 des Scharnierhebels 2 zumindest an einem Berührpunkt 20 an der Gegensteuerfläche 19 des Stützhebels 15 zur ersten Anlage gekommen ist oder bereits unter normalen Bedingungen anliegt, die ideellen Verbindungsgeraden 21, 22 einerseits zwischen dem Berührpunkt 20 und der Achse 16 des Stützhebels 15 und andererseits zwischen dem Berührpunkt 20 und dem Zapfen 6 der Zapfen-/Langlochverbindung einen stumpfen Winkel beispielsweise zwischen 120 Grad und 170 Grad nach oben bilden.

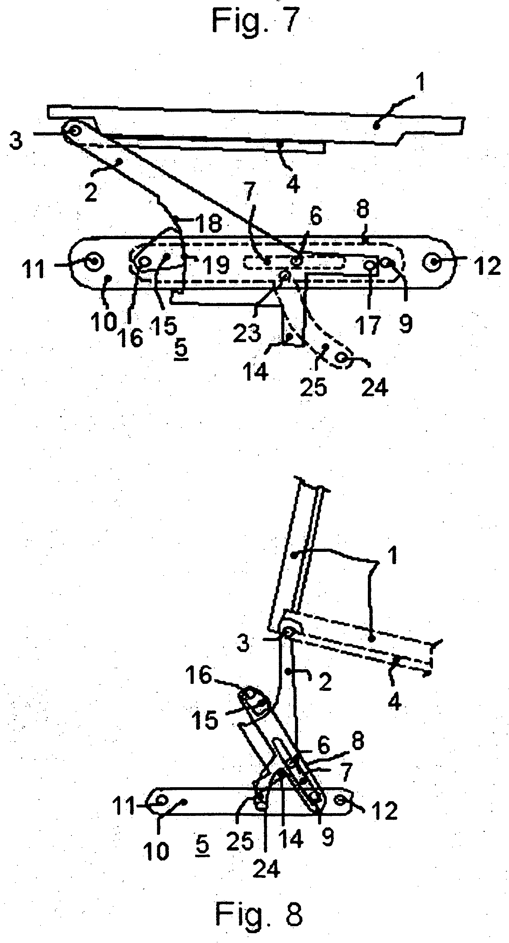

Die Steuerfläche 18 des Scharnierhebels 2 und die damit zusammen wirkende Gegensteuerfläche 19 des Stützhebels 15 sind so ausgebildet, dass beispielsweise bei einem Frontalcrash auf die Frontklappe 1 von vorne, bei dem die Überlastverbindung gelöst bzw. der Scherbolzen 17 abgeschert und der Scharnierhebel 2 eventuell zumindest etwas nach hinten verstellt wird, der über die Steuerfläche 18 und die Gegensteuerfläche 19 mit dem Stützhebel 15 zusammen wirkende Scharnierhebel 2 einen Hebelbereich des Stützhebels 15 derart nach oben verstellt und dabei selbst eventuell etwas nach oben verschwenkt, nach einem zumindest kleinen Schwenkwinkel des Stützhebels 15 nach oben die ideellen Verbindungsgeraden 21, 22 einerseits zwischen dem Berührpunkt 20 und der Achse 16 des Stützhebels 15 und andererseits zwischen dem Berührpunkt 20 und dem Zapfen 6 der Zapfen-/Langlochverbindung wie in Fig. 7 dargestellt etwa auf einer Geraden liegen und sich dadurch der Stützhebel 15 im Wesentlichen an seiner Achse 16 abstützt.

In Fig. 9 ist erkennbar, dass bei dem Ausführungsbeispiel entweder der Scharnierhebel 2 oder das Wartungsschwenkteil 8 mehrere Aufnahmeöffnungen 26, 27, 28, 29 für einen einzigen Scherbolzen 6 aufweist, der bei einer Verwendung der Scharniereinrichtung an unterschiedlichen Frontklappen 1 jeweils in eine der betreffenden Frontklappe 1 zugeordnete Aufnahmeöffnung 26 oder 27 oder 28 oder 29 eingebracht ist und zur normalen Fixierung des Scharnierhebels 2 bereichsweise entwe-der in eine Öffnung 26 oder 27 oder 28 oder 29 an dem anderen Teil, an dem Wartungsschwenkteil 8 oder an dem Scharnierhebel 2 eingreift oder zwischen Stützschultern an diesem anderen Teil angeordnet ist. Damit ändert sich der Abstand zwischen der Karosserie und der Frontklappe entsprechend. Die Frontklappe kann somit beispielsweise bei einem gleichen oder ähnlichen Vorderbau verschiedener Kraftfahrzeuge dem jeweiligen Kraftfahrzeug entsprechend höher oder tiefer angeordnet sein.

Wie Fig. 9 zu entnehmen ist, weist der Schwenkhebel 2 bei dem Ausführungsbeispiel zwei etwa gleiche, über Distanzelemente 30, 31 beispielsweise parallel angeordnete Schwenkhebelteile 32, 33 auf.

Die Erfindung kann von dem Ausführungsbeispiel abweichend ausgeführt werden. Der Scharnierhebel kann direkt oder mittelbar mit der Frontklappe und andererseits über die Schwenklagerung direkt oder mittelbar an der Karosserie des Kraftfahrzeugs abgestützt sein. Die Überlastverbindung kann den Scharnierhebel in seiner Winkellage gegenüber der Karosserie auf sehr unterschiedliche Weise festhalten. Die unfallbedingte Belastung, bei der die Überlastverbindung den Scharnierhebel für eine Schwenkbewegung frei gibt, kann sehr unterschiedlich gebildet sein. Der Stützhebel kann um eine Achse schwenkbar direkt oder mittelbar an der Karosserie oder an einem damit verbundenen Bauteil abgestützt sein. Die Schwenklagerung ist bei dem Ausführungsbeispiel durch eine Zapfen-/Langlochverbindung gebildet und kann auch auf andere Weise gebildet sein. Bei Verwendung einer Zapfen-/Langlochverbindung können der Zapfen und das Langloch jeweils der Zapfen-/Langlochverbindung sehr unterschiedlich im Querschnitt und in der Form gebildet sein. Beispielsweise kann das Langloch der Zapfen-/Langlochverbindung zumindest bereichsweise einen geraden und/oder gekrümmten Bereich aufweisen. Das Langloch kann auch mit seiner wesentlichen Längsrichtung in Fahrzeuglängsrichtung nach vorne oben oder vorne unten geneigt angeordnet sein. Der Scherbolzen kann einen symmetrischen oder unsymmetrischen Querschnitt aufweisen und in unterschiedlichen Richtungen bei gleichen oder unterschiedlichen Kräften abgeschert werden. Das Wartungsschwenkteil und/oder das Verstärkungselement können auch einzeln oder gemeinsam entfallen. Der Scharnierhebel kann auch eine Steuerfläche oder weitere Steuerfläche aufweisen, die bei einem unfallbedingten Aufprall beispielsweise eines Fußgängers auf die Frontklappe von vorne, bei dem die Überlastverbindung gelöst wird, sofort oder nach einer lokalen Verstellbewegung der Frontklappe nach hinten an einer Gegensteuerfläche oder weiteren Gegensteuerfläche jeweils des Stützhebels anliegt und bei einer weiteren unfallbedingten Belastung der Frontklappe von vorne zumindest an einem Berührpunkt von der Gegensteuerfläche des Stützhebels gestützt ist, der sich unter dieser Belastung an seiner Achse und eventuell an einem karosseriefesten Anschlag abstützt. Die Scharniereinrichtung kann modular beispielsweise nach einem Baukastensystem aufgebaut sein. Durch das Auswechseln eines Teiles oder mehrerer Teile ist eine Anpassung an jeweils ein Kraftfahrzeug verschiedener Fahrzeuge beispielsweise einer Baureihe möglich. Insbesondere kann durch die Auswahl und Verwendung von Teilen aus dem Baukastensystem eine Anpassung von Teilen der Scharniereinrichtung an unterschiedliche Karosserien und/oder Frontklappen und/oder Schwenkhebel der Scharniereinrichtung erfolgen. Der Aktuator kann ein beliebiger motorischer Aktuator oder ein beliebiger Federspeicher bzw. Kraftspeicher sein. Beispielsweise ist ein motorischer Aktuator ein pneumatischer oder hydraulischer oeder elektrischer oder pyrotechnischer Aktuator.

## Patentansprüche

1. Scharniereinrichtung für eine Frontklappe (1) eines Kraftfahrzeugs, mit einem Scharnierhebel (2), der um eine Schwenkachse (3) schwenkbar zumindest mittelbar mit der Frontklappe (1) verbunden und andererseits über eine Schwenklagerung zumindest mittelbar an der Karosserie (5) des Kraftfahrzeugs abgestützt ist, und eine Oberlastverbindung (17) den Scharnierhebel (2) in seiner Winkellage gegenüber der Karosserie (5) festhält, die beim Überschreiten einer unfallbedingten Belastung ein Verschwenken des Scharnierhebels (2) gegenüber der Karosserie ermöglicht, wobei ein Stützhebel (15) um eine Achse (16) schwenkbar zumindest mittelbar an der Karosserie (5) abgestützt ist, wobei der Stützhebel (15) derart ausgebildet ist, dass bei einem Aufprall beispielsweise eines Fussgängers auf die Frontklappe (1) von oben, bei dem eine unfallbedingte Belastung überschritten und dadurch die Überlastverbindung (17) gelöst wird, beim nachfolgenden Verstellen der Frontklappe (1) nach unten der Scharnierhebel (2) den Stützhebel (15), der von einem Federetement nach oben belastet ist, gegen die Kraft des Federelements verschwenkt, und dass beim Überschreiten einer unfallbedingten Belastung der Frontklappe (1) von vorne der Stützhebel (15) den Scharnierhebel (2) sofort oder zumindest nach einem kleinen Verstellweg des Scharnierhebels (2) etwa in Fahrzeuglängsrichtung stützt.

2. Scharniereinrichtung nach Anspruch 1, **dadurch gekennzeichnet, dass** die Schwenklagerung durch eine Zapfen-/Langlochverbindung mit einem Zapfen (6) in einem Langloch (7) gebildet ist, und der Zapfen (6) oder das Langloch an dem Scharnierhebel (2) und das Langloch (7) oder der Zapfen an dem anderen Teil, zumindest mittelbar an der Karosserie (5) oder an dem Scharnierhebel angeordnet bzw. ausgebildet ist.

3. Scharniereinrichtung nach Anspruch 1 oder 2, **dadurch gekennzeichnet, dass** mit der Frontklappe (1) ein Scharnierteil (4) verbunden ist, an dem die Schwenkachse (3) des Scharnierhebels (2) ausgebildet ist.

4. Scharniereinrichtung nach einem der Ansprüche 1 bis 3, **dadurch gekennzeichnet, dass** die Überlastverbindung einen Scherbolzen (17) aufweist, der bei einer unfallbedingten Belastung abgeschert wird und in einem Abstand von der Schwenklagerung (6, 7) an dem Scharnierhebel (2) oder zumindest mittelbar an der Karosserie angeordnet ist und normal entweder in eine Öffnung (26) an dem anderen Teil, zumindest mittelbar an der Karosserie (5) oder an dem Scharnierhebel eingreift, oder vor einer Stützschulter an diesem anderen Teil, zumindest mittelbar an der Karosserie oder an dem Scharnierhebel angeordnet ist.

5. Scharniereinrichtung nach Anspruch 4, **dadurch gekennzeichnet, dass** der Scherbolzen (17) einen unsymmetrischen Querschnitt aufweist, der bei einer vorgegebenen vertikalen unfallbedingten Belastung und/oder bei einer vorgegebenen horizontalen unfallbedingten Belastung abschert.

6. Schamiereinrichtung nach einem der Ansprüche 1 bis 5, **dadurch gekennzeichnet, dass** der Scharnierhebel (2) eine Steuerfläche (18) aufweist, die bei einem unfallbedingten Aufprall zum Beispiel eines Fußgängers auf die Frontklappe (1) von oben, bei dem die Überlastverbindung (17) gelöst wird, sofort oder nach einer lokalen Absenkbewegung der Frontklappe (1) an einer Gegensteuerfläche (19) des Stützhebels (15) anliegt und bei einer nachfolgenden Absenkbewegung zumindest eines Bereiches der Frontklappe (1) mit der Gegensteuerfläche (19) zusammen wirkend einen Hebelbereich des Stützhebels (15) gegen die Kraft des Federelements nach unten verstellt.

7. Scharniereinrichtung nach einem der Ansprüche 1 bis 6, **dadurch gekennzeichnet, dass** der Scharnierhebel eine Steuerfläche oder weitere Steuerfläche aufweist, die bei einem unfallbedingten Aufprall beispielsweise eines Fußgängers auf die Frontklappe von vorne, bei dem die Überlastverbindung gelöst wird, sofort oder nach einer lokalen Verstellbewegung der Frontklappe nach hinten an einer Gegensteuerfläche oder weiteren Gegensteuerfläche jeweils des Stützhebels anliegt und bei einer weiteren unfallbedingten Belastung der Frontklappe von vorne zumindest an einem Berührpunkt von der Gegensteuerfläche des Stützhebels gestützt ist, der sich unter dieser Belastung an seiner Achse und eventuell an einem karosseriefesten Anschlag abstützt.

8. Scharniereinrichtung nach Anspruch 7, **dadurch gekennzeichnet, dass** die Steuerfläche (18) des Scharnierhebels (2) und die damit zusammen wirkende Gegensteuerfläche (19) des Stützhebels (15) so ausgebildet sind, dass bei einem unfallbedingten Aufprall beispielsweise eines Fußgängers auf die Frontklappe (1) von vorne, bei dem die Überlastverbindung (17) gelöst wurde und durch die Belastung der Frontklappe (1) von vorne die Steuerfläche (18) des Scharnierhebel (2) zumindest an einem Berührpunkt (20) an der Gegensteuerfläche(19) des Stützhebels (15) zur ersten Anlage gekommen ist oder bereits unter normalen Bedingungen anliegt, die ideellen Verbindungsgeraden (21, 22) einerseits zwischen dem Berührpunkt (20) und der Achse (16) des Stützhebels (17) und andererseits zwischen dem Berührpunkt (20) und dem Zapfen (6) der Zapfen-/Langlochverbindung einen stumpfen Winkel nach oben bilden.

9. Scharniereinrichtung nach Anspruch 7 oder 8, **dadurch gekennzeichnet, dass** die Steuerfläche (18) des Scharnierhebels (2) und die damit zusammen wirkende Gegensteuerfläche (119) des Stützhebels (15) so ausgebildet sind, dass bei einem unfallbedingten Aufprall auf die Frontklappe (1) von vorne, bei dem die Überlastverbindung (17) gelöst und der Scharnierhebel (2) zumindest etwas nach hinten verstellt wird, der über die Steuerfläche (18) und die Gegensteuerfläche (19) mit dem Stützhebel (15) zusammen wirkende Scharnierhebel (2) einen Hebelbereich des Stützhebels(15) derart nach unten verstellt und dabei selbst eventuell etwas nach oben verschwenkt, dass nach einem Schwenkwinkel des Stützhebels (15) die ideellen Verbindungsgeraden (21, 22) einerseits zwischen dem Berührpunkt (20) und der Achse (16) des Stützhebels (15) und andererseits zwischen dem Berührpunkt (20) und dem Zapfen (6) der Zapfen-/Langlochverbindung etwa auf einer Geraden liegen und sich dadurch der Stützhebel (15) im Wesentlichen an seiner Achse (16) abstützt.

10. Scharniereinrichtung nach einem der Ansprüche 1 bis 9, **dadurch gekennzeichnet, dass** bei einem von einer Sensoreinrichtung erfassten eingetretenen oder bevorstehenden Aufprall eines Fußgängers auf die Frontklappe(1) ein zumindest mittelbar an einem Hebelarm des Scharnierhebels (2) angelenkter Aktuator (13) an dem Scharnierhebel (2) ein die Überlastverbindung (17) lösendes Drehmoment bewirkt, durch das zumindest ein Bereich der Frontklappe (1) in eine Fußgängerschutzlage hochgestellt wird und dabei die Frontklappe (1) an einem anderen, beispielsweise vorderen Bereich über wenigstens ein Klappenschloss verriegelt bleibt.

11. Scharniereinrichtung nach einem der Ansprüche 1 bis 10, **dadurch gekennzeichnet, dass** der Zapfen (6) der Zapfen-/Langlochverbindung in einem Abstand von der Überlastverbindung (17) mit dem Scharnierhebel(2) verbunden und das Langloch (7) der Zapfen-/Langlochverbindung an einem Wartungsschwenkteil (8) ausgebildet sind, das an der Karosserie oder an einem damit verbundenen Verstärkungselement (10) um eine Wartungsschwenkachse (9) schwenkbar angeordnet und über eine Halteeinrichtung (23, 24) in einer etwa horizontalen Normallage sowie in einer um die Wartungsschwenkachse (9) hochgeschwenkten Wartungslage jeweils arretierbar ist, und die Achse (16) des Stützhebels (15) an dem Wartungsschwenkteil (8) ausgebildet ist.

12. Scharniereinrichtung nach Anspruch 11, **dadurch gekennzeichnet, dass** das Wartungsschwenkteil (8) über wenigstens ein lösbares Befestigungsmittel, beispielsweise eine Schraube in seiner etwa horizontalen Normallage und in seiner hochgeschwenkten Wartungslage gegenüber der Karosserie (5) fixierbar ist, oder zusätzlich gegebenenfalls die Schraube in der Normallage und in der Wartungslage durch jeweils eine Durchtrittsöffnung (23, 24) im Wartungsschwenkteil (8) hindurch in ein Gewinde an der Karosserie (5) oder an einem mit der Karosserie verbundenen Bauteil einschraubbar ist, oder zusätzlich gegebenenfalls die Durchtrittsöffnungen(23, 24) in winkelmäßigen Abständen um die Wartungsschwenkachse (9) an einem Schenkel (25) des Wartungsschwenkteiles (8) ausgebildet sind.

13. Scharniereinrichtung nach einem der Ansprüche 1 bis 12, **dadurch gekennzeichnet, dass** entweder der Scharnierhebel (2) oder das Wartungsschwenkteil (8) mehrere Aufnahmeöffnungen (26, 27, 28, 29) für einen Scherbolzen (17) aufweist, der bei einer Verwendung der Scharniereinrichtung an unterschiedlichen Frontklappen (1) jeweils in eine der betreffenden Frontklappe (1) zugeordnete Aufnahmeöffnung (26, 27, 28, 29) eingebracht ist und zur normalen Fixierung des Scharnierhebels (2) bereichsweise entweder in eine Öffnung an dem anderen Teil, an dem Wartungsschwenkteil oder an dem Scharnierhebel eingreift oder zwischen Stützschultern an diesem anderen Teil angeordnet ist.

## Claims

1. A hinge device for a bonnet (1) of a motor vehicle, comprising a hinge lever (2) which, being swivellable about a swivel pin (3), is connected at least indirectly to the bonnet (1) and on the other side is supported at least indirectly on the body (5) of the motor vehicle by a swivel bearing, and an overload connection (17) which holds the hinge lever (2) in its angular position relative to the body (5) and, if a load caused by an accident is exceeded, it allows the hinge lever (2) to swivel relative to the body, wherein a support lever (15), being swivellable about a pivot (16), is supported at least indirectly on the body (5), wherein the support lever (15) is configured such that in the event of an impact, for example by a pedestrian on the bonnet (1) from above, during which an accident-related load is exceeded and consequently the overload connection (17) is released, when the bonnet (1) is subsequently adjusted downwards, the hinge lever (2) swivels the support lever (15) which is loaded upwards by a spring element, against the force of the spring element, and is configured such that if an accident-related load on the bonnet (1) from the front is exceeded, the support lever (15) supports the hinge lever (2) immediately or at least after a short adjustment path of the hinge lever (2) approximately in the longitudinal direction of the vehicle.

2. A hinge device according to claim 1, **characterised in that** the swivel bearing is formed by a pin/slot connection with a pin (6) in a slot (7), and the pin (6) or the slot is arranged or configured on the hinge lever (2) and the slot (7) or the pin is arranged or configured on the other part, at least indirectly on the body (5) or on the hinge lever.

3. A hinge device according to claim 1 or claim 2, **characterised in that** connected to the bonnet (1) is a hinge part (4) on which the swivel pin (3) of the hinge lever (2) is configured.

4. A hinge device according to any one of claims 1 to 3, **characterised in that** the overload connection has a shear bolt (17) which shears off in the event of an accident-related load and is arranged on the hinge lever (2) or at least indirectly on the body at a distance from the swivel bearing (6, 7) and it normally engages either in an opening (26) in the other part, at least indirectly on the body (5) or on the hinge lever, or is arranged in front of a supporting shoulder on this other part, at least indirectly on the body or on the hinge lever.

5. A hinge device according to claim 4, **characterised in that** the shear bolt (17) has an asymmetrical cross section which shears off in the event of a predetermined vertical accident-related load and/or in the event of a predetermined horizontal accident-related load.

6. A hinge device according to any one of claims 1 to 5, **characterised in that** the hinge lever (2) has a control face (18) which, in the event of an accident-related impact, for example by a pedestrian on the bonnet (1) from above, in which case the overload connection (17) is released, rests immediately or following a local lowering movement of the bonnet (1) on an opposite control face (19) of the support lever (15) and during a subsequent lowering movement of at least one region of the bonnet (1), in cooperation with the opposite control face (19) it moves a lever region of the support lever (15) downwards against the force of the spring element.

7. A hinge device according to any one of claims 1 to 6, **characterised in that** the hinge lever has a control face or has a further control face which, in the event of an accident-related impact, for example by a pedestrian on the bonnet from the front, in which case the overload connection is released, rests immediately or following a local adjustment movement of the bonnet backwards on an opposite control face or on a further opposite control face respectively of the support lever and in the event of a further accident-related load on the bonnet from the front, is supported at least on one contact point of the opposite control face of the support lever which, under this load, is supported on its pivot and possibly on a stop fixed on the body.

8. A hinge device according to claim 7, **characterised in that** the control face (18) of the hinge lever (2) and the cooperating opposite control face (19) of the support lever (15) are configured such that in the event of an accident-related impact, for example by a pedestrian on the bonnet (1) from the front, in which case the overload connection (17) is released and as a result of the load on the bonnet (1) from the front, the control face (18) of the hinge lever (2) initially rests at least on one contact point (20) on the opposite control face (19) of the support lever (15) or already rests thereon under normal conditions, the ideal connection lines (21, 22) on one hand between the contact point (20) and the pivot (16) of the support lever (15) and on the other hand between the contact point (20) and the pin (6) of the pin/slot connection form an upwards obtuse angle.

9. A hinge device according to claim 7 or claim 8, **characterised in that** the control face (18) of the hinge lever (2) and the cooperating opposite control face (19) of the support lever (15) are configured such that in the event of an accident-related impact on the bonnet (1) from the front, in which case the overload connection (17) is released and the hinge lever (2) is moved at least slightly backwards, the hinge lever (2) cooperating with the support lever (15) via the control face (18) and the opposite control face (19) moves a lever region of the support lever (15) downwards and, in so doing, possibly even swivels it slightly upwards such that according to a swivel angle of the support lever (15), the ideal connection lines (21, 22) on one hand between the contact point (20) and the pivot (16) of the support lever (15) and on the other hand between the contact point (20) and the pin (6) of the pin/slot connection are positioned approximately on a straight line and as a result, the support lever (15) is substantially supported on its pivot (16).

10. A hinge device according to any one of claims 1 to 9, **characterised in that** in the event of an impact by a pedestrian on the bonnet (1), which impact has occurred or is about to occur and is detected by a sensor device, an actuator (13) on the hinge lever (2), which actuator is coupled at least indirectly to a lever arm of the hinge lever (2), causes a torque which releases the overload connection (17) and by which torque at least one region of the bonnet (1) is raised into a pedestrian protection position and the bonnet (1) remains locked by at least one bonnet lock in another region, for example in a front region.

11. A hinge device according to any one of claims 1 to 10, **characterised in that** the pin (6) of the pin/slot connection is connected to the hinge lever (2) at a distance from the overload connection (17) and the slot (7) of the pin/slot connection is formed in a maintenance swivel part (8) which is arranged on the body or on a reinforcing element (10) connected thereto such that it can swivel about a maintenance swivel pin (9) and can be respectively locked by a retaining device (23, 24) in an approximately horizontal normal position and also in a maintenance position swivelled vertically about the maintenance swivel pin (9), and the pivot (16) of the support lever (15) is formed on the maintenance swivel part (8).

12. A hinge device according to claim 11, **characterised in that** the maintenance swivel part (8) can be fixed relative to the body (5) in its approximately horizontal normal position and in its vertically swivelled maintenance position by at least one releasable fastening means, for example by a screw, or additionally the screw can optionally be screwed into a thread on the body (5) or on a component connected to the body (5) through a respective passage opening (23, 24) in the maintenance swivel part (8) in the normal position and in the maintenance position, or additionally the passage openings (23, 24) are optionally formed in a limb (25) of the maintenance swivel part (8) in angular spacings around the maintenance swivel pin (9).

13. A hinge device according to any one of claims 1 to 12, **characterised in that** either the hinge lever (2) or the maintenance swivel part (8) has a plurality of receiving openings (26, 27, 28, 29) for a shear bolt (17) which, when the hinge device is used on different bonnets (1), is respectively introduced into a receiving opening (26, 27, 28, 29) associated with the relevant bonnet (1) and for the normal fixing of the hinge lever (2) in certain areas, engages either in an opening in the other part, in the maintenance swivel part or in the hinge lever or is arranged between supporting shoulders on this other part.

## Revendications

1. Dispositif de charnière pour un capot frontal (1) d'un véhicule automobile comprenant un levier de charnière (2) articulé au moins de façon indirecte sur le capot frontal (1) de façon à pouvoir pivoter autour d'un axe de pivotement (3) et s'appuyant, par au moins de façon indirecte sur la carrosserie (5) du véhicule, l'intermédiaire d'un palier de pivotement et une liaison de surcharge (17) maintenant le levier de charnière (2) dans sa position angulaire par rapport à la carrosserie (5), et qui permet en cas de dépassement d'une charge consécutive à un accident permet un pivotement du levier de charnière (2) par rapport à la carrosserie, un levier support (15) s'appuyant au moins de façon indirecte sur la carrosserie (5) en étant mobile en pivotement autour d'un axe (16), et ce levier support (15) étant réalisé de sorte que, en présence d'un choc par le haut, par exemple d'un piéton sur le capot frontal (1), par lequel une charge consécutive à un accident, et ainsi, la liaison de surcharge (17) est relâchée, lors du déplacement suivant du capot frontal (1) vers le bas, le levier de charnière (2), fasse pivoter le levier support (15) qui est rappelé vers le haut par un élément élastique, contre la force de rappel de cet élément élastique, et que, en cas de dépassement d'une charge consécutive à un accident du capot frontal (1) par l'avant le levier support (15) supporte le levier de charnière (2) essentiellement dans la direction longitudinale du véhicule immédiatement ou après une petite course de déplacement de ce levier de charnière (2).

2. Dispositif de charnière conforme à la revendication 1,
**caractérisé en ce que**
le palier de pivotement est formé par une liaison broche / trou oblong avec une broche (6) logée dans un trou oblong (7) et la broche (6) ou le trou oblong (7) étant situé ou formé au moins de manière indirecte sur le levier de charnière (2) ou la carrosserie (5) et le trou oblong (7) ou la broche (6) étant situé ou formé au moins de manière indirecte sur l'autre élément, c'est-à-dire la carrosserie (5) ou le levier de charnière (2).

3. Dispositif de charnière conforme à la revendication 1 ou 2,
**caractérisé en ce qu'**
au capot frontal (1) est reliée une partie de charnière (4) sur laquelle est formé l'axe de pivotement (3) du levier de charnière (2).

4. Dispositif de charnière conforme à l'une des revendications 1 à 3,
**caractérisé en ce que**
la liaison de surcharge comprend une goupille de cisaillement (17) qui est cisaillée en cas d'une charge consécutive à un accident et est située à distance du palier de pivotement (6, 7) sur le levier de charnière (2) ou au moins indirectement sur la carrosserie, et, de façon normale soit vient en prise dans une ouverture (26) de l'autre élément, située au moins indirectement sur la carrosserie (5) ou sur le levier de charnière, soit est montée en avant d'un épaulement support sur cette autre élément, au moins indirectement sur la carrosserie ou sur le levier de charnière.

5. Dispositif de charnière conforme à la revendication 4,
**caractérisé en ce que**
la goupille de cisaillement (17) a une section asymétrique qui, se cisaille dans le cas d'une charge verticale prédéfinie consécutive à un accident et/ou en cas d'une charge horizontale prédéfinie consécutive à un accident.

6. Dispositif de charnière conforme à l'une des revendications 1 à 5,
**caractérisé en ce que**
le levier de charnière (2) comporte une surface de commande (18) qui, lors d'un choc consécutif à un accident, par exemple d'un piéton sur le capot frontal (1) par le haut, par lequel la liaison anti-surcharge (17) est relâchée, aussitôt ou après un mouvement d'abaissement local, du capot frontal (1) s'applique sur une surface de commande antagoniste (19) du levier support (15), et qui lors d'un mouvement d'abaissement suivant d'au moins une zone du capot frontal (1) déplace vers le bas, en agissant conjointement à la surface de commande antagoniste (19) une zone de levier du levier support (15) contre la force de rappel de l'élément élastique.

7. Dispositif de charnière conforme à l'une des revendications 1 à 6,
**caractérisé en ce que**
le levier de charnière comporte une surface de commande ou d'autres surfaces de commande qui, en cas de choc consécutif à un accident par exemple d'un piéton sur le capot frontal par l'avant, par lequel la liaison de surcharge est relâchée, immédiatement ou après un mouvement de déplacement local du capot frontal vers l'arrière s'appuie(nt) contre une surface de commande antagoniste ou d'autres surfaces de commande antagonistes respectives du levier support, et en présence d'une autre surcharge consécutive à un accident, du volet frontal par l'avant s'appuie au moins au niveau d'un point de contact de la surface de commande antagoniste du levier d'appui qui s'appuie, sous l'action de cette charge, sur son axe et éventuellement sur une butée solidaire de la carrosserie.

8. Dispositif de charnière conforme à la revendication 7,
**caractérisé en ce que**
la surface de commande (18) du levier de charnière (2) et la surface de commande antagoniste (19) du levier d'appui (15) agissant conjointement à celle-ci sont réalisées de sorte qu'en cas de choc consécutif à un accident par exemple d'un piéton sur le capot frontal (1) par l'avant, par lequel la liaison anti-surcharge (17) a été relâchée, et du fait de la charge du capot frontal (1) par l'avant, la surface de commande (18) du levier de charnière (2) est venue en premier appui au moins par un point de contact (20) sur la surface de commande antagoniste (19) du levier support (15), ou s'applique déjà dans des conditions normales, les droites de liaison idéales (21, 22) d'une part entre le point de contact (20) et l'axe (16) du levier support (17) et d'autre part, entre le point de contact (20) et la broche (6) de la liaison broche / trou oblong forment un angle obtus dirigé vers le haut.

9. Dispositif de charnière conforme à la revendication 7 ou 8,
**caractérisé en ce que**
la surface de commande (18) du levier de charnière (2) et la surface de commande antagoniste (19) du levier support (15) agissant conjointement avec celle-ci sont réalisées de sorte que, en cas de choc consécutif à un accident sur le capot frontal (1) par l'avant, par lequel la liaison de surcharge (17) est relâchée et le levier de charnière (2) est au moins un peu déplacé vers l'arrière, le levier de charnière (2) agissant conjointement avec le levier support (15) par l'intermédiaire de la surface de commande (18) et de la surface de commande antagoniste (19) déplace une zone de levier du levier support (15) vers le bas et est éventuellement lui-même un peu déplacé vers le haut par pivotement, de sorte que, après un angle de pivotement du levier support (15) les droites de liaison idéales (21, 22) d'une part entre le point de contact (20) et l'axe (16) du levier support (15) et d'autre part, entre le point de contact (20) et la broche (6) de la liaison broche / trou oblong sont essentiellement alignée et ainsi le levier support (15) s'appuie essentiellement sur son axe (16).

10. Dispositif de charnière conforme à l'une des revendications 1 à 9,
**caractérisé en ce qu'**
en présence d'un choc d'un piéton sur le capot frontal (1) survenu ou attendu détecté par un dispositif de capteur, un actionneur (13) articulé au moins indirectement sur un bras de levier du levier de charnière (2) exerce sur le levier de charnière (2) un couple de rotation relâchant la liaison de surcharge (17), par lequel au moins une zone du capot frontal (1) est relevée dans une position de protection des piétons, et le capot frontal (1) reste bloqué dans une autre zone par exemple une zone avant par l'intermédiaire d'au moins une serrure du capot.

11. Dispositif de charnière conforme à l'une des revendications 1 à 10,
**caractérisé en ce que**
la broche (6) de la liaison broche / trou oblong est reliée au levier de charnière (2) à distance de la liaison de surcharge (17) et le trou oblong (7) de la liaison broche / trou oblong est formé sur une partie pivotante de service (8) qui est montée mobile en pivotement autour d'un axe de pivotement de service (9) sur la carrosserie ou un élément de renfort (10) relié à celle-ci, et peut être respectivement arrêtée par l'intermédiaire d'un dispositif de retenue (23, 24) dans une position normale essentiellement horizontale ainsi que dans une position de service déplacée vers le haut par pivotement autour de l'axe de pivotement de service (9), et l'axe (16) du levier support (15) est formé sur la partie pivotante de service (8).

12. Dispositif de charnière conforme à la revendication 11,
**caractérisé en ce que**
la partie pivotante de service (8) peut être fixée par l'intermédiaire d'au moins un moyen de fixation amovible, par exemple d'une vis dans sa position normale essentiellement horizontale et dans sa position de service déplacée vers le haut par pivotement par rapport à la carrosserie (5), ou, en outre, le cas échéant la vis peut être vissée dans la position normale et dans la position de service au travers d'une ouverture de passage respective (23, 24) de la partie pivotante de service (8) dans un filetage de la carrosserie (5) ou d'un autre élément lié à la carrosserie, ou en outre, le cas échéant, les ouvertures de passage (23, 24) sont situées sur une branche (25) de la partie pivotante de service (8) en étant écartées angulairement autour de l'axe pivotant de service (9).

13. Dispositif de charnière conforme à l'une des revendications 1 à 12,
**caractérisé en ce que**
soit le levier de charnière (2), soit la partie pivotante de service (8) comprend plusieurs ouvertures de réception (26, 27, 28, 29) d'une goupille de cisaillement (17) qui, lors d'une utilisation du dispositif de charnière sur différents capots frontaux (1) est respectivement montée dans une ouverture de réception (26, 27, 28, 29) associée au volet frontal (1) correspondant, et qui pour permettre une fixation normale du levier de charnière (2), vient en prise par zones soit dans une ouverture de l'autre élément à savoir la partie pivotante de service ou le levier de charnière, ou est positionnée entre des épaulements support de cet autre élément.
